# EUROPÄISCHE PATENTSCHRIFT

(11) **EP 3 990 253 B1**
(45) Veröffentlichungstag und Bekanntmachung des Hinweises auf die Patenterteilung: **09.10.2024**
(21) Anmeldenummer: 20728480.3
(22) Anmeldetag: 26.05.2020
(51) Int. Cl.: B29C 53/58, B29C 70/20, H01B 17/36, B29C 53/66, B29L 31/34, B29L 23/00, B29K 105/08, B29K 105/10

(54) **VERFAHREN ZUR HERSTELLUNG EINES ELEKTRISCHEN HOHLISOLATORS, ELEKTRISCHER HOHLISOLATOR UND VERWENDUNG EINES ELEKTRISCHEN HOHLISOLATORS**
METHOD FOR PRODUCING AN ELECTRIC HOLLOW INSULATOR, ELECTRIC HOLLOW INSULATOR AND USE OF AN ELECTRIC HOLLOW INSULATOR
PROCEDE DE PRODUCTION D'UN ISOLANT ELECTRIQUE CREUX, ISOLANT ELECTRIQUE CREUX ET UTILISATION D'UN ISOLANT ELECTRIQUE CREUX

(30) Priorität: 28.06.2019 DE 102019117501
(43) Veröffentlichungstag der Anmeldung: 04.05.2022
(73) Patentinhaber: Maschinenfabrik Reinhausen GmbH, 93059 Regensburg (DE)
(72) Erfinder: BRULAND, Matthias, 93057 Regensburg (DE)
(86) Internationale Anmeldenummer: PCT/EP2020/064549
(87) Internationale Veröffentlichungsnummer: WO 2020/259939

(56) Entgegenhaltungen:
- WO-A1-2011/026519
- DE-A1- 10 235 438
- DE-A1- 19 856 123
- DE-T2- 3 889 487
- DE-T2- 3 889 487

## Beschreibung

Es werden ein Verfahren zur Herstellung eines elektrischen Hohlisolators, ein elektrischer Hohlisolator und eine Verwendung eines elektrischen Hohlisolators angegeben.

Ein Verfahren zur Herstellung eines elektrischen Hohlisolators und ein elektrischer Hohlisolator sind beispielsweise in der Druckschrift WO 2011/026519 A1 beschrieben.

Ein weiteres Verfahren zur Herstellung eines elektrischen Isolators und ein elektrischer Isolator sind beispielsweise in der Druckschrift DE 38 89 487 T2 beschrieben. Der elektrische Isolator weist einen zylindrischen Bereich A und Enden B auf. Sowohl der zylindrische Bereich A als auch die Enden B weisen kreuzweise übereinanderliegende Schichten aus Glasfasern auf, welche mit einem Harz imprägniert sind und um ein zylindrisches Element mit einem Spiralwicklungswinkel kleiner als 90° gewickelt sind.

Es soll ein elektrischer Hohlisolator mit einer erhöhten Festigkeit und/oder einer erhöhten Steifigkeit in zumindest einem Endbereich zur Verfügung gestellt werden. Außerdem soll ein vereinfachtes Verfahren zur Herstellung eines elektrischen Hohlisolators bereitgestellt werden. Schließlich soll eine vorteilhafte Verwendung des elektrischen Hohlisolators angegeben werden.

Diese Aufgaben werden durch ein Verfahren mit den Schritten des Patentanspruchs 1, durch einen elektrischen Hohlisolator mit den Merkmalen des Patentanspruchs 5 und durch eine Verwendung gemäß Patentanspruch 9 gelöst.

Vorteilhafte Ausführungsformen und Weiterbildungen des Verfahrens, des elektrischen Hohlisolators und der Verwendung sind in den jeweils abhängigen Ansprüchen angegeben. Erfindungsgemäß wird zur Durchführung des Verfahrens zur Herstellung eines elektrischen Hohlisolators ein Kern bereitgestellt. Der Kern weist in der Regel eine längliche Form auf. Bevorzugt ist eine Einhüllende des Kerns rotationssymmetrisch zu einer Rotationsachse des Kerns ausgebildet. Beispielsweise weist die Einhüllende die Form eines Zylinders oder eines Ellipsoids auf. Außerdem weist der Kern bevorzugt eine Haupterstreckungsrichtung auf, die parallel zu der Rotationsachse der Einhüllenden des Kerns verläuft.

Erfindungsgemäß werden erste gewickelte Lagen eines ersten Faserelements auf den Kern aufgewickelt. Hierzu wird das erste Faserelement bevorzugt durch einen Faserkopf auf den Kern geführt. Entweder der Faserkopf oder der Kern werden mit einer, bevorzugt konstanten, Geschwindigkeit entlang der Haupterstreckungsrichtung des Kerns bewegt, wobei der Kern gleichzeitig um seine Rotationsachse gedreht wird, bevorzugt ebenfalls mit einer gleichmäßigen Geschwindigkeit. Bevorzugt werden die ersten gewickelten Lagen über die gesamte Länge des Kerns aufgewickelt.

Erfindungsgemäß werden zweite gewickelte Lagen eines zweiten Faserelements auf einen Endbereich des Kerns aufgewickelt.

Das Aufwickeln der zweiten gewickelten Lagen auf den Endbereich des Kerns wird hierbei in der Regel so durchgeführt wie das in dem vorherigen Absatz beschriebene Aufwickeln der ersten gewickelten Lagen.

Das erste und/oder das zweite Faserelement weist bevorzugt eine Vielzahl an Fasern auf oder ist aus einer Vielzahl an Fasern gebildet. Die Fasern des ersten und/oder des zweiten Faserelements weisen besonders bevorzugt Glas, wie ein E-Glas, auf oder sind aus einem E-Glas gebildet. Bei dem E-Glas handelt es sich insbesondere um ein Aluminiumborsilikat-Glas mit weniger als 2 % Alkalioxiden.

Weiterhin können auch Kunststofffasern, beispielsweise Polyesterfasern oder Amidfasern, für das Faserelement geeignet sein. Die Fasern des Faserelements können weiterhin mit einem ungehärteten polymeren Harz vorimprägniert sein (englisch: *"prepreg").* Hierbei sind die Fasern mit dem ungehärteten Harz, beispielsweise einem Epoxidharz, umhüllt. Bei dem ersten und/oder dem zweiten Faserelement kann es sich um ein Faserbündel oder ein Roving handeln.

Besonders bevorzugt sind das erste Faserelement und das zweite Faserelement gleich ausgebildet. Dies weist den Vorteil auf, dass zwischen dem Aufwickeln der ersten gewickelten Lagen und dem Aufwickeln der zweiten gewickelten Lagen das Faserelement am Faserkopf nicht gewechselt werden muss.

Das Aufwickeln der zweiten gewickelten Lagen des zweiten Faserelements erfolgt besonders bevorzugt lediglich im Endbereich des Kerns. Der Kern weist in der Regel zwei gegenüberliegende Stirnflächen auf, wobei der Endbereich des Kerns an eine der beiden Stirnflächen angrenzt.

Erfindungsgemäß weisen die ersten gewickelten Lagen Windungen des ersten Faserelements auf, die einen ersten Wickelwinkel mit der Haupterstreckungsrichtung des Kerns einschließen. Die zweiten gewickelten Lagen weisen Windungen des zweiten Faserelements auf, die einen zweiten Wickelwinkel mit der Haupterstreckungsrichtung des Kerns einschließen. Der zweite Wickelwinkel ist hierbei größer als der erste Wickelwinkel. Bevorzugt ist der zweite Wickelwinkel mindestens zweimal so groß wie der erste Wickelwinkel. Erfindungsgemäß liegt der erste Wickelwinkel zwischen einschließlich 10° und einschließlich 60°, bevorzugt zwischen einschließlich 20° und einschließlich 54°. Erfindungsgemäß liegt der zweite Wickelwinkel zwischen einschließlich 70° und einschließlich 90°, bevorzugt zwischen einschließlich 80° und einschließlich 90°.

Mit dem Begriff "Windung" wird vorliegend der Abschnitt des Faserelements einer gewickelten Lage bezeichnet, die den Kern oder den fertigen elektrischen Hohlisolator einmal vollständig umläuft. Jede gewickelte Lage weist in der Regel eine Vielzahl an Windungen auf oder setzt sich aus einer Vielzahl an Windungen zusammen. Zwei direkt benachbarte Windungen einer gewickelten Lage grenzen bevorzugt direkt aneinander an. Die Windungen einer gewickelten Lage können alle den gleichen Wickelwinkel aufweisen. Weiterhin ist es auch möglich, dass die Wickelwinkel der Windungen einer gewickelten Lage unterschiedlich sind.

Erfindungsgemäß bleibt ein Innenbereich des Kerns frei von zweiten gewickelten Lagen. Der Innenbereich grenzt hierbei an den Endbereich an. Mit anderen Worten werden die zweiten gewickelten Lagen besonders bevorzugt lediglich auf dem Endbereich des Kerns aufgebracht.

Mittels der zweiten gewickelten Lagen, die lediglich in einem Endbereich des Kerns aufgebracht werden, kann mit Vorteil im Endbereich eine mechanische Verstärkung des fertigen elektrischen Hohlisolators erzielt werden.

Gemäß einer weiteren Ausführungsform des Verfahrens werden die ersten gewickelten Lagen und die zweiten gewickelten Lagen alternierend aufeinander gewickelt. Mit anderen Worten werden immer abwechselnd eine oder mehrere erste gewickelte Lagen und eine oder mehrere zweite gewickelte Lagen auf den Kern aufgewickelt. Auf diese Art und Weise können die zweiten gewickelten Lagen besonders gut in die ersten gewickelten Lagen integriert werden.

Alternativ hierzu ist es auch möglich, zunächst alle zweiten gewickelten Lagen auf den Endbereich des Kerns aufzuwickeln und danach alle ersten gewickelten Lagen über die gesamte Länge des Kerns aufzuwickeln, um den elektrischen Hohlisolator herzustellen.

Gemäß einer weiteren Ausführungsform des Verfahrens werden die zweiten gewickelten Lagen mit zunehmender Anzahl auf einen kleineren Bereich des Endbereichs ausgehend von der Stirnfläche des Kerns aufgewickelt. Mit anderen Worten bedeckt jede zweite gewickelte Lage bevorzugt einen kleineren Bereich entlang der Haupterstreckungsrichtung ausgehend von der Stirnfläche des Kerns als die vorherige zweite gewickelte Lage. Insbesondere weisen die zweiten gewickelten Lagen mit zunehmender Anzahl weniger Windungen auf. Auf diese Art und Weise kann eine besonders gute Festigkeit des Endbereichs des fertigen elektrischen Hohlisolators erzielt werden.

Erfindungsgemäß werden die zweiten gewickelten Lagen nicht unter der Verwendung von Wendemitteln aufgewickelt. Mit anderen Worten ist der Kern beim Aufwickeln der zweiten gewickelten Lagen frei von Wendemitteln. Bei den Wendemitteln kann es sich beispielsweise um Ausbuchtungen auf dem Kern oder Stifte handeln, die im Endbereich des Kerns oder an der Stirnfläche angebracht sind, und die die Windungen von einem Herunterrutschen vom Kern hindern.

Bei der Verwendung von Wendemitteln bildet sich in der Regel am Ende des Kerns ein Überschussvolumen des aufgewickelten Faserelements. In der Regel wird das Material des Überschussvolumens entfernt, beispielsweise durch Schleifen. Hierbei werden jedoch in der Regel Fasern des Faserelements durchtrennt, so dass die Festigkeit und/oder Steifigkeit des fertigen elektrischen Hohlisolators verringert wird.

Insbesondere ist es vorliegend möglich, die zweiten gewickelten Lagen des zweiten Faserelements ohne die Verwendung von Wendemitteln im Endbereich des Kerns aufzubringen, da die zweiten gewickelten Lagen einen vergleichsweise großen Wickelwinkel, bevorzugt zwischen einschließlich 70° und einschließlich 90°, aufweisen. So kann das Verfahren durch eine Verringerung an Prozessschritten vereinfacht und ein elektrischer Hohlisolator mit verbesserter mechanischer Stabilität erzielt werden.

Gemäß einer weiteren Ausführungsform des Verfahrens werden die ersten Faserelemente und/oder die zweiten Faserelemente vor dem Aufwickeln durch ein flüssiges Matrixmaterial geführt. Beispielsweise wird das flüssige Matrixmaterial in einem Bad bereitgestellt. Bei dem flüssigen Matrixmaterial handelt es sich in der Regel um ein ungehärtetes polymeres Harz, beispielsweise um ein ungehärtetes Epoxid.

Weiterhin ist es auch möglich, dass das Matrixmaterial in die ersten gewickelten Lagen und/oder in die zweiten gewickelten Lagen nach dem Aufwickeln eingebracht wird, beispielsweise unter Zuhilfenahme von Vakuum und/oder Druck.

Gemäß einer Ausführungsform des Verfahrens wird das Matrixmaterial ausgehärtet, bevorzugt am Ende des Verfahrens. Auf diese Art und Weise wird ein mechanisch stabiler elektrischer Hohlisolator erzielt.

Das hier beschriebene Verfahren ist zur Herstellung eines elektrischen Hohlisolators geeignet. Sämtliche Merkmale und Ausführungsformen, die vorliegend in Verbindung mit dem Verfahren beschrieben sind, können folglich auch bei dem elektrischen Hohlisolator ausgebildet sein und umgekehrt.

Erfindungsgemäß umfasst der elektrische Hohlisolator erste gewickelte Lagen eines ersten Faserelements, und zweite gewickelte Lagen eines zweiten Faserelements in einem Endbereich des elektrischen Hohlisolators.

Der elektrische Hohlisolator weist in der Regel eine Wand auf, die einen inneren Hohlraum begrenzt. Die ersten gewickelten Lagen und die zweiten gewickelten Lagen sind in der Regel von der Wand umfasst oder bilden die Wand aus.

Der elektrische Hohlisolator weist besonders bevorzugt eine zylindrische Form oder eine Form mit einer Einhüllenden mit einer zylindrischen Form auf. Besonders bevorzugt ist die Form des elektrischen Hohlisolators rotationssymmetrisch zu einer Rotationsachse des elektrischen Hohlisolators. Die Rotationsachse des elektrischen Hohlisolators ist bevorzugt parallel zu einer Haupterstreckungsrichtung des elektrischen Hohlisolators angeordnet.

Erfindungsgemäß weisen die ersten gewickelten Lagen Windungen des ersten Faserelements auf, die einen ersten Wickelwinkel mit der Haupterstreckungsrichtung des elektrischen Hohlisolators einschließen.

Erfindungsgemäß weisen die zweiten gewickelten Lagen Windungen des zweiten Faserelements auf, die einen zweiten Wickelwinkel mit der Haupterstreckungsrichtung des elektrischen Hohlisolators einschließen. Der zweite Wickelwinkel ist bevorzugt größer als der erste Wickelwinkel, bevorzugt mindestens doppelt so groß. Der erste Wickelwinkel liegt erfindungsgemäß zwischen einschließlich 10° und einschließlich 60°, bevorzugt zwischen einschließlich 20° und einschließlich 54°. Der zweite Wickelwinkel liegt erfindungsgemäß zwischen einschließlich 70° und einschließlich 90°, bevorzugt zwischen einschließlich 80° und einschließlich 90°.

Erfindungsgemäß ist ein Innenbereich des elektrischen Hohlisolators frei von zweiten gewickelten Lagen. Die zweiten gewickelten Lagen sind folglich lediglich in zumindest einem Endbereich des elektrischen Hohlisolators angeordnet. Es ist allerdings auch möglich, dass auch ein zweiter Endbereich des elektrischen Hohlisolators, der dem ersten Endbereich gegenüberliegt, ebenfalls mit zweiten gewickelten Lagen versehen ist. Die zweiten gewickelten Lagen bilden eine mechanische Verstärkung im Endbereich des elektrischen Hohlisolators aus. Auf diese Art und Weise kann die Festigkeit und/oder Steifigkeit des elektrischen Hohlisolators im Endbereich mit Vorteil verstärkt werden.

Erfindungsgemäß werden die zweiten gewickelten Lagen nicht unter der Verwendung von Wendemitteln aufgewickelt.

Außerdem führen die zweiten gewickelten Lagen in der Regel mit Vorteil zu einer Erhöhung der Wandstärke im Endbereich des elektrischen Hohlisolators. Schon diese geometrische Veränderung bewirkt mit Vorteil eine erhöhte Steifigkeit zumindest im Endbereich.

Besonders bevorzugt sind die ersten gewickelten Lagen und die zweiten gewickelten Lagen alternierend miteinander angeordnet. So können die zweiten gewickelten Lagen besonders gut in die ersten gewickelten Lagen integriert werden, so dass die Festigkeit und/oder die Steifigkeit des elektrischen Hohlisolators verbessert ist.

Gemäß einer besonders bevorzugten Ausführungsform des elektrischen Hohlisolators nimmt die Anzahl an zweiten gewickelten Lagen zu einer Außenfläche des elektrischen Hohlisolators zu, ausgehend von dem Innenbereich zu der Stirnfläche des elektrischen Hohlisolators. Mit anderen Worten bedeckt jede zweite gewickelte Lage bevorzugt einen kleineren Bereich entlang der Haupterstreckungsrichtung ausgehend von der Stirnfläche des elektrischen Hohlisolators als die vorherige zweite gewickelte Lage. Insbesondere weisen die zweiten gewickelten Lagen mit zunehmender Anzahl weniger Windungen auf. Auf diese Art und Weise kann eine besonders gute Festigkeit des Endbereichs des elektrischen Hohlisolators erzielt werden.

Besonders bevorzugt weist die Wand des elektrischen Hohlisolators angrenzend an die Stirnfläche des elektrischen Hohlisolators eine größere Dicke auf als angrenzend an den Innenbereich. Dies kann beispielsweise durch die Abnahme der Windungen der zweiten gewickelten Lagen mit zunehmender Anzahl erzielt werden. Dementsprechend weist die Außenfläche des Endbereichs des elektrischen Hohlisolators beispielsweise eine geneigte Fläche auf, die an den Innenbereich direkt angrenzt.

Besonders bevorzugt sind die zweiten gewickelten Lagen des elektrischen Hohlisolators frei von durchtrennten Fasern, zumindest im Rahmen der Herstellungstoleranzen. Dies bedeutet vorliegend insbesondere, dass mindestens 90 % und besonders bevorzugt mindestens 95 % der Faserelemente der zweiten gewickelten Lagen frei sind von durchtrennten Fasern.

Bei dem elektrischen Hohlisolator handelt es sich besonders bevorzugt um ein mit Glasfasern verstärktes Kunststoffrohr (GFK-Rohr).

Der hier beschriebene elektrische Hohlisolator ist insbesondere zur Durchführung in einem Transformator geeignet. Bei dem hier vorgeschlagenen elektrischen Hohlisolator kann der mit den zweiten gewickelten Lagen verstärkte Endbereich des elektrischen Hohlisolators insbesondere zur Befestigung mittels eines Flansches verwendet werden. Ein elektrischer Hohlisolator, der insbesondere zur Durchführung in einem Transformator verwendet ist, ist häufig im Endbereich, der meist mit einem Flansch versehen ist, hohen mechanischen Belastungen durch eine Biegebeanspruchung oder auch durch eine Druckbeanspruchung, aufgrund eines inneren Gasdrucks, ausgesetzt. Dadurch kann sich der elektrische Hohlisolator zeitweise verformen, so dass die Verbindung mit dem Flansch, etwa mit einem Kleber, beeinträchtigt wird. Aufgrund der Verstärkung im Endbereich durch die zweiten gewickelten Lagen kann der Endbereich des elektrischen Hohlisolators mit einer höheren mechanischen Belastung, beispielsweise einer Biegebelastung, beaufschlagt werden.

Mit dem hier vorgeschlagenen Verfahren kann mit Vorteil ein elektrischer Hohlisolator mit einer hohen mechanischen Stabilität im Endbereich durch in den Wickelprozess integrierte Verfahrensschritte erzielt werden.

Weitere vorteilhafte Ausführungsformen und Weiterbildungen des elektrischen Hohlisolators und des Verfahrens zur Herstellung des elektrischen Hohlisolators ergeben sich aus den im Folgenden in Verbindung mit den Figuren beschriebenen Ausführungsbeispielen.

Anhand der schematischen Darstellungen der Figuren 1 bis 3 wird ein Verfahren zur Herstellung eines elektrischen Hohlisolators gemäß einem ersten Ausführungsbeispiel näher erläutert.

Die Figuren 4 und 5 zeigen schematische Darstellungen eines elektrischen Hohlisolators gemäß einem Ausführungsbeispiel.

Die Figuren 6 bis 9 zeigen schematische Darstellungen eines elektrischen Hohlisolators gemäß weiterer Ausführungsbeispiele.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente, insbesondere Schichtdicken, zur besseren Darstellbarkeit und/oder zum besseren Verständnis übertrieben groß dargestellt sein.

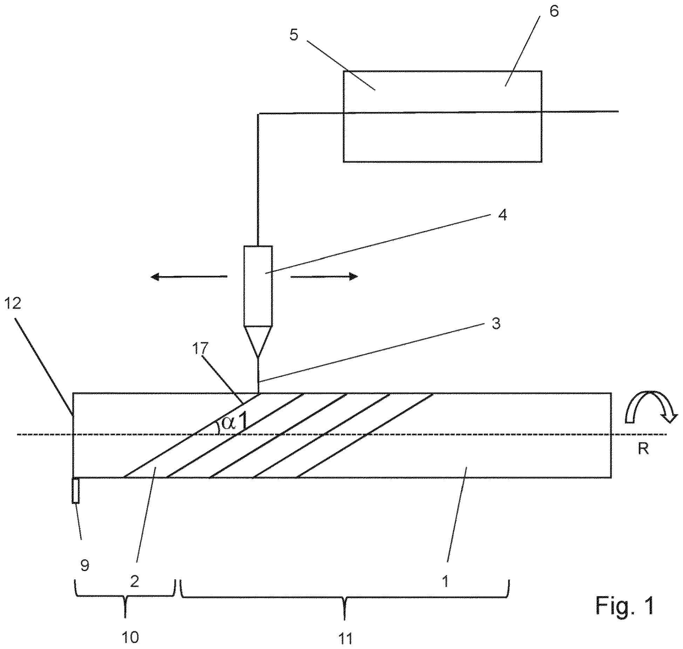

Bei dem Verfahren gemäß dem Ausführungsbeispiel der Figuren 1 bis 3 wird in einem ersten Schritt ein Kern 1 bereitgestellt (nicht dargestellt). Der Kern 1 weist hierbei eine Form mit einer rotationssymmetrischen Einhüllenden auf. Beispielsweise weist die Einhüllende eine zylindrische oder eine elliptische Form auf. Die Einhüllende ist rotationssymmetrisch zu einer Rotationsachse R.

In einem nächsten Schritt werden Windungen 17 eines ersten Faserelements 3 auf den Kern 1 aufgewickelt (Figur 1). Bei dem ersten Faserelement 3 handelt es sich beispielsweise um ein Bündel Glasfasern. Das erste Faserelement 3 wird hierzu durch einen Faserkopf 4 geführt, der sich entlang einer Haupterstreckungsrichtung des Kerns 1, die parallel zu der Rotationsachse 8 des Kerns 1 angeordnet ist, bewegt (siehe die Pfeile).

Der Kern 1 wird hierbei um seine Rotationsachse R gedreht, bevorzugt mit einer konstanten Geschwindigkeit. Zum Aufwickeln einer ersten gewickelten Lage 2 des ersten Faserelements 3, beispielsweise über eine gesamte Länge des Kerns 1, wird das erste Faserelement 3 zunächst auf dem Kern 1 befestigt. Dann wird der Faserkopf 4 von einer Stirnfläche 12 des Kerns 1 entlang der Haupterstreckungsrichtung zu einer anderen Stirnfläche des Kerns 1 bewegt. Die Windungen 17 des ersten Faserelements 3 bilden dann eine erste gewickelte Lage 2 auf dem Kern 1 aus. Es können nun auf gleiche Art und Weise mehrere erste gewickelte Lagen 2 aufgewickelt werden.

Die Windungen 17 des ersten Faserelements 3 der ersten gewickelten Lage 2 weist mit der Haupterstreckungsrichtung des Kerns 1 einen ersten Wickelwinkel α1 auf. Der erste Wickelwinkel α1 liegt hierbei zwischen einschließlich 10° und einschließlich 60°.

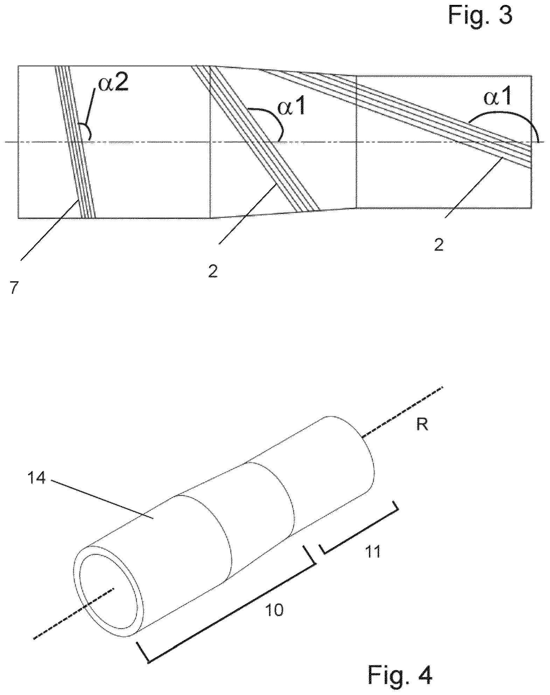

Die Windungen 17 der ersten gewickelten Lage 2 können unterschiedliche erste Wickelwinkel α1 mit der Haupterstreckungsrichtung einschließen (Figur 3). Weiterhin ist es auch möglich, dass die Windungen 17 unterschiedlicher erster gewickelter Lagen 2 verschiedene erste Wickelwinkel α1 mit der Haupterstreckungsrichtung einschließen.

Der Kern 1 weist vorliegend einen Endbereich 10 und einen Innenbereich 11 auf, der direkt an den Endbereich 10 anschließt. An der Stirnfläche 12 des Kerns 1 ist vorliegend ein Wendemittel 9, beispielsweise ein Stift, angeordnet. Das Wendemittel 9 stellt sicher, dass die Windungen 17 des ersten Faserelements 3 nicht über die Stirnflächen 12 des Kerns 1 rutschen.

Bevor das erste Faserelement 3 durch den Faserkopf 14 auf den Kern 1 geführt wird, durchläuft das erste Faserelement 3 vorliegend ein Bad 5 mit einem flüssigen Matrixmaterial 6, beispielsweise einem Epoxidharz. Das erste Faserelement 3 ist nach dem Durchlaufen des Bads 5 mit dem flüssigen Matrixmaterial 6 getränkt.

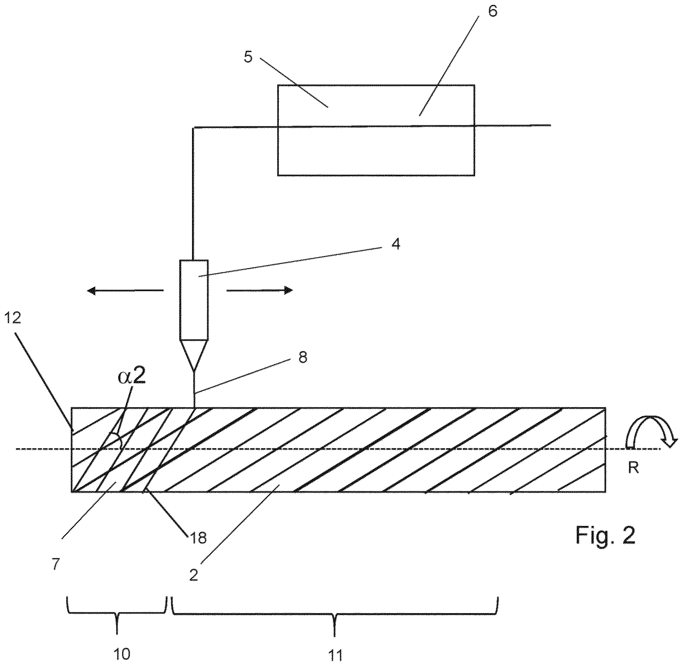

In einem nächsten Schritt, der schematisch in Figur 2 dargestellt ist, wird eine zweite gewickelte Lage 7 eines zweiten Faserelements 8 auf dem Endbereich 10 des Kerns 1 aufgewickelt. Die zweite gewickelte Lage 7 weist Windungen 18 des zweiten Faserelements 8 auf, die einen zweiten Wickelwinkel α2 mit der Haupterstreckungsrichtung des Kerns 1 einschließen. Der zweite Wickelwinkel α2 ist hierbei größer als der erste Wickelwinkel α1, etwa mindestens doppelt so groß (Figur 3). Der Wert des zweiten Wickelwinkels α2 liegt zwischen einschließlich 70° und einschließlich 90°. Es können nun mehrere zweite gewickelte Lagen 7 übereinander aufgebracht werden. Die Windungen 18 einer zweiten gewickelten Lage 7 können unterschiedliche zweite Wickelwinkel α2 mit der Haupterstreckungsrichtung einschließen. Weiterhin ist es auch möglich, dass die Windungen 18 unterschiedlicher zweiter gewickelter Lagen 7 verschiedene zweite Wickelwinkel α2 mit der Haupterstreckungsrichtung einschließen.

Die zweite gewickelte Lage 7 des zweiten Faserelements 8 wird lediglich in dem Endbereich 10 des Kerns 1 aufgewickelt. Der Innenbereich 11 des Kerns 1 bleibt hierbei frei von der zweiten gewickelten Lage 7. Es ist auch möglich, dass auch auf einem weiteren Endbereich eine zweite gewickelte Lage 7 des zweiten Faserelements 8 aufgewickelt wird.

Bei dem Verfahren gemäß dem Ausführungsbeispiel der Figuren 1 bis 3 wird lediglich bei dem Aufwickeln der ersten gewickelten Lagen 2 ein Wendemittel 9 an der Stirnfläche 12 des Kerns 1 verwendet, während die zweiten gewickelten Lagen 7 ohne die Verwendung eines Wendemittels 9 auf den Kern 1 aufgebracht werden.

Es werden nun in alternierender Abfolge jeweils eine oder mehrere weitere erste gewickelte Lagen 2 des ersten Faserelements 3 und eine oder mehrere weitere zweite gewickelte Lagen 7 des zweiten Faserelements 8 auf den Kern 1 aufgewickelt.

Anschließend wird das flüssige Matrixmaterial 6 ausgehärtet. Auf diese Art und Weise entsteht ein mechanisch stabiler elektrischer Hohlisolator.

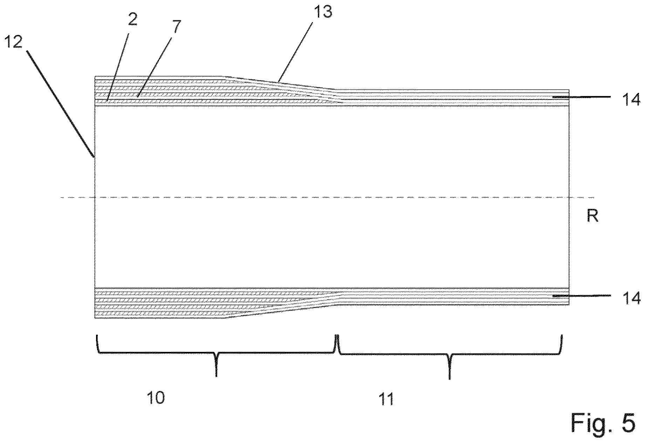

Der elektrische Hohlisolator gemäß dem Ausführungsbeispiel der Figuren 4 und 5 weist eine Einhüllende mit einer zylindrischen Form auf, wie beispielsweise anhand der perspektivischen schematischen Darstellungen von Figur 4 gezeigt. Der elektrische Hohlisolator ist rotationssymmetrisch zu einer Rotationsachse R, die parallel zu einer Haupterstreckungsrichtung des elektrischen Hohlisolators verläuft. Der Endbereich 10 des elektrischen Hohlisolators weist hierbei zumindest teilweise eine größere Querschnittsfläche auf als ein Innenbereich 11 des elektrischen Hohlisolators.

Der elektrische Hohlisolator weist eine Wand 14 auf, die einen Innenraum begrenzt. Die Wand 14 des elektrischen Hohlisolators umfasst die ersten gewickelten Lagen 2 und die zweiten gewickelten Lagen 7. In dem Innenbereich 11 des elektrischen Hohlisolators sind lediglich erste gewickelte Lagen 2 von der Wand 14 umfasst, während in einem Endbereich 10 des elektrischen Hohlisolators die ersten gewickelten Lagen 2 alternierend mit zweiten gewickelten Lagen 7 angeordnet sind. Hierbei nimmt die Anzahl an zweiten gewickelten Lagen 7 zu einer Außenfläche 13 des elektrischen Hohlisolators ausgehend von dem Innenbereich 11 zu einer Stirnfläche 12 des elektrischen Hohlisolators zu (Figur 5).

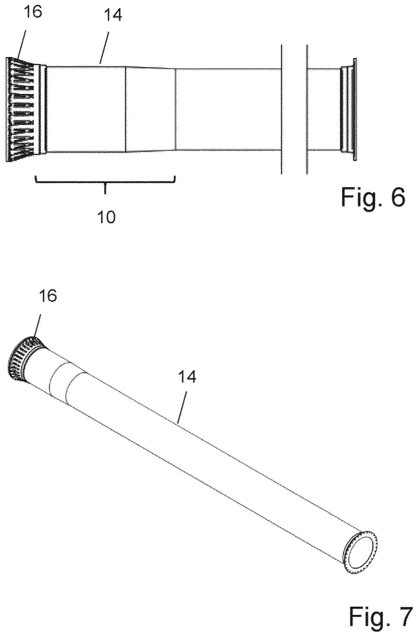

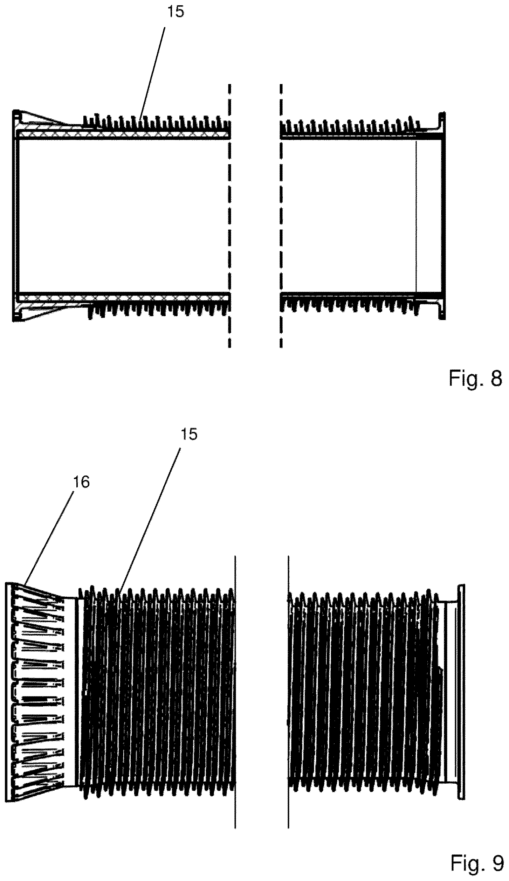

Bei dem elektrischen Hohlisolator gemäß dem Ausführungsbeispiel der Figuren 6 und 7 ist an der Stirnfläche 12 ein Flansch 16 angebracht. Weiterhin ist bei dem elektrischen Hohlisolator gemäß dem Ausführungsbeispiel der Figuren 8 und 9 auf die Außenfläche 13 des elektrischen Hohlisolators eine Beschirmung 15 angebracht, beispielsweise eine Silikonbeschirmung. Ein elektrischer Hohlisolator, der mit einem Flansch 16 und einer Beschirmung 15 versehen ist, ist insbesondere zur Verwendung als Durchführung zu einem Transformator geeignet.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet.

### Bezugszeichenliste

- 1: Kern
- 2: erste gewickelte Lage
- 3: erstes Faserelement
- 4: Faserkopf
- 5: Bad
- 6: Matrixmaterial
- 7: zweite gewickelte Lage
- 8: zweites Faserelement
- 9: Wendemittel
- 10: Endbereich
- 11: Innenbereich
- 12: Stirnfläche
- 13: Außenfläche
- 14: Wand
- 15: Beschirmung
- 16: Flansch
- 17: Windung des ersten Faserelements
- 18: Windung des zweiten Faserelements

- α1: erster Wickelwinkel
- α2: zweiter Wickelwinkel
- R: Rotationsachse

## Patentansprüche

1. Verfahren zur Herstellung eines elektrischen Hohlisolators mit den folgenden Schritten:
- Bereitstellen eines Kerns (1),
- Aufwickeln von ersten gewickelten Lagen (2) eines ersten Faserelements (3) auf den Kern (1),
- Aufwickeln von zweiten gewickelten Lagen (7) eines zweiten Faserelements (8) auf einen Endbereich (10) des Kerns (1), wobei
- die ersten gewickelten Lagen (2) Windungen (17) des ersten Faserelements (3) aufweisen, die einen ersten Wickelwinkel (α1) mit einer Haupterstreckungsrichtung des Kerns (1) einschließen
- die zweiten gewickelten Lagen (7) Windungen (18) des zweiten Faserelements (8) aufweisen, die einen zweiten Wickelwinkel (α2) mit der Haupterstreckungsrichtung des Kerns (1) einschließen, der größer ist als der erste Wickelwinkel (α1), und
- ein Innenbereich (11) des Kerns (1) frei bleibt von zweiten gewickelten Lagen (7)
- der erste Wickelwinkel (α1) zwischen einschließlich 10° und einschließlich 60° liegt, und
- der zweite Wickelwinkel (α2) zwischen einschließlich 70° und einschließlich 90° liegt, und
- die zweiten gewickelten Lagen (7) nicht unter der Verwendung von Wendemitteln (9) aufgewickelt werden.

2. Verfahren nach dem vorherigen Anspruch,
bei dem die ersten gewickelten Lagen (2) und die zweiten gewickelten Lagen (7) alternierend aufeinander gewickelt werden.

3. Verfahren nach einem der obigen Ansprüche,
bei dem die zweiten gewickelten Lagen (7) mit zunehmender Anzahl auf einen kleineren Bereich des Endbereichs (10) ausgehend von einer Stirnfläche (12) des Kerns (1) aufgewickelt werden.

4. Verfahren nach einem der obigen Ansprüche,
bei dem die ersten Faserelemente (3) und/oder die zweiten Faserelemente (7) vor dem Aufwickeln durch ein flüssiges Matrixmaterial (6) geführt werden.

5. Elektrischer Hohlisolator mit:
- ersten gewickelten Lagen (2) eines ersten Faserelements (3), und
- zweiten gewickelten Lagen (7) eines zweiten Faserelements (8) in einem Endbereich (10) des elektrischen Hohlisolators, wobei
- die ersten gewickelten Lagen (2) Windungen (17) des ersten Faserelements (3) aufweisen, die einen ersten Wickelwinkel (α1) mit einer Haupterstreckungsrichtung des elektrischen Hohlisolators einschließen, wobei der erste Wickelwinkel (α1) zwischen einschließlich 10° und einschließlich 60° liegt,
- die zweiten gewickelten Lagen (7) Windungen (18) des zweiten Faserelements (8) aufweisen, die einen zweiten Wickelwinkel (α2) mit der Haupterstreckungsrichtung des elektrischen Hohlisolators einschließen, der größer ist als der erste Wickelwinkel (α1), wobei der zweite Wickelwinkel (α2) zwischen einschließlich 70° und einschließlich 90° liegt, und
- ein Innenbereich (11) des elektrischen Hohlisolators frei ist von zweiten gewickelten Lagen (7),
wobei
- die zweiten gewickelten Lagen (7) nicht unter der Verwendung von Wendemitteln (9) aufgewickelt werden.

6. Elektrischer Hohlisolator nach dem vorherigen Anspruch, bei dem die ersten gewickelten Lagen (2) und die zweiten gewickelten Lagen (7) alternierend angeordnet sind.

7. Elektrischer Hohlisolator nach einem der Ansprüche 5 bis 6,
bei dem die Anzahl an zweiten gewickelten Lagen (7) ausgehend von einer Außenfläche (13) des elektrischen Hohlisolators von dem Innenbereich (10) zu einer Stirnfläche (12) des elektrischen Hohlisolators zunimmt.

8. Elektrischer Hohlisolator nach einem der Ansprüche 5 bis 7,
bei dem die zweiten gewickelten Lagen (7) frei sind von durchtrennten Fasern.

9. Verwendung eines elektrischen Hohlisolators nach einem der Ansprüche 5 bis 8 zur Durchführung in einem Transformator.

## Claims

1. A method for producing a hollow electrical insulator comprising the following steps:
- providing a core (1),
- winding first wound layers (2) of a first fiber element (3) onto the core (1),
- winding second wound layers (7) of a second fiber element (8) onto an end region (10) of the core (1), wherein
- the first wound layers (2) have turns (17) of the first fiber element (3) which enclose a first winding angle (α1) with a main direction of extension of the core (1),
- the second wound layers (7) comprise turns (18) of the second fiber element (8) which enclose a second winding angle (α2) with the main direction of extension of the core (1) which is larger than the first winding angle (α1), and
- an inner region (11) of the core (1) remains free of second wound layers (7),
- the first winding angle (α1) is between 10° and 60° inclusive, and
- the second winding angle (α2) is between 70° and 90° inclusive, and
- the second wound layers (7) are not wound using turning means (9).

2. The method as claimed in the preceding claim,
in which the first wound layers (2) and the second wound layers (7) are alternately wound on top of each other.

3. The method as claimed in one of the above claims,
in which the second wound layers (7) are wound with increasing number onto a smaller region of the end region (10) starting from an end face (12) of the core (1).

4. The method as claimed in one of the above claims,
in which the first fiber elements (3) and/or the second fiber elements (7) are passed through a liquid matrix material (6) prior to winding.

5. A hollow electrical insulator comprising:
- first wound layers (2) of a first fiber element (3), and
- second wound layers (7) of a second fiber element (8) in an end region (10) of the hollow electrical insulator, wherein
- the first wound layers (2) comprise turns (17) of the first fiber element (3) which enclose a first winding angle (α1) with a main direction of extension of the hollow electrical insulator, wherein the first winding angle (α1) is between 10° and 60° inclusive,
- the second wound layers (7) comprise turns (18) of the second fiber element (8) which enclose a second winding angle (α2) with the main direction of extension of the hollow electrical insulator which is greater than the first winding angle (α1), wherein the second winding angle (α2) is between 70° and 90° inclusive, and
- an inner region (11) of the hollow electrical insulator is free of second wound layers (7),
wherein
- the second wound layers (7) are not wound using turning means (9).

6. The hollow electrical insulator as claimed in the preceding claim,
in which the first wound layers (2) and the second wound layers (7) are arranged alternately.

7. The hollow electrical insulator as claimed in one of claims 5 to 6,
in which the number of second wound layers (7) starting from an outer surface (13) of the hollow electrical insulator increases from the inner region (10) to an end face (12) of the hollow electrical insulator.

8. The hollow electrical insulator as claimed in one of claims 5 to 7,
in which the second wound layers (7) are free of severed fibers.

9. Use of a hollow electrical insulator as claimed in one of claims 5 to 8 to provide a bushing in a transformer.

## Revendications

1. Procédé de fabrication d'un isolateur électrique creux comprenant les étapes suivantes :
- Fournir un noyau (1),
- L'enroulement de premières couches enroulées (2) d'un premier élément fibreux (3) sur le noyau (1),
- l'enroulement de secondes couches enroulées (7) d'un second élément fibreux (8) sur une partie d'extrémité (10) du noyau (1), dans lequel
- les premières couches enroulées (2) comprennent des spires (17) du premier élément fibreux (3) qui forment un premier angle d'enroulement (α1) avec une direction d'extension principale du noyau (1)
- les secondes couches enroulées (7) comprennent des spires (18) du second élément fibreux (8) qui forment un second angle d'enroulement (α2) avec la direction d'extension principale du noyau (1) qui est plus grand que le premier angle d'enroulement (α1), et
- une zone intérieure (11) du noyau (1) reste libre de secondes couches enroulées (7)
- le premier angle d'enroulement (α1) est compris entre 10° et 60° inclus, et
- le second angle d'enroulement (α2) est compris entre 70° et 90° inclus, et
- les secondes couches enroulées (7) ne sont pas enroulées en utilisant des moyens de retournement (9).

2. Procédé selon la revendication précédente,
dans lequel les premières couches enroulées (2) et les secondes couches enroulées (7) sont enroulées alternativement les unes sur les autres.

3. Procédé selon l'une des revendications ci-dessus,
dans lequel les deuxièmes couches enroulées (7) sont enroulées avec un nombre croissant sur une zone plus petite de la zone d'extrémité (10) en partant d'une face frontale (12) du noyau (1).

4. Procédé selon l'une quelconque des revendications ci-dessus,
dans lequel les premiers éléments fibreux (3) et/ou les deuxièmes éléments fibreux (7) sont passés à travers un matériau de matrice liquide (6) avant l'enroulement.

5. Isolateur électrique creux avec :
- premières couches enroulées (2) d'un premier élément fibreux (3), et
- deuxième couche enroulée (7) d'un deuxième élément fibreux (8) dans une zone d'extrémité (10) de l'isolateur électrique creux, dans lequel
- les premières couches enroulées (2) comprennent des spires (17) du premier élément fibreux (3) qui forment un premier angle d'enroulement (α1) avec une direction d'extension principale de l'isolateur électrique creux, le premier angle d'enroulement (α1) étant compris entre 10° inclus et 60° inclus,
- les secondes couches enroulées (7) comprennent des spires (18) du second élément fibreux (8) qui forment un second angle d'enroulement (α2) avec la direction d'extension principale de l'isolateur électrique creux qui est plus grand que le premier angle d'enroulement (α1), le second angle d'enroulement (α2) étant compris entre 70° et 90° inclus, et
- une zone intérieure (11) de l'isolateur électrique creux est exempte de secondes couches enroulées (7),
où
- les secondes couches enroulées (7) ne sont pas enroulées en utilisant des moyens de retournement (9).

6. Isolateur électrique creux selon la revendication précédente,
dans lequel les premières couches enroulées (2) et les secondes couches enroulées (7) sont disposées en alternance.

7. Isolateur électrique creux selon l'une quelconque des revendications 5 à 6,
dans lequel le nombre de secondes couches enroulées (7) augmente à partir d'une surface extérieure (13) de l'isolateur électrique creux, de la zone intérieure (10) vers une surface d'extrémité (12) de l'isolateur électrique creux.

8. Isolateur électrique creux selon l'une quelconque des revendications 5 à 7,
dans lequel les deuxièmes couches enroulées (7) sont exemptes de fibres coupées.

9. Utilisation d'un isolateur électrique creux selon l'une quelconque des revendications 5 à 8 pour sa mise en œuvre dans un transformateur.
